# EUROPEAN PATENT APPLICATION

(11) **EP 2 056 261 A1**
(43) Date of publication of application: **06.05.2009**
(21) Application number: 07119665.3
(22) Date of filing: 30.10.2007
(51) Int. Cl.: G07F 7/02, G07F 11/00, G06Q 20/00

(54) **Electronic payments using mobile communication devices**

(71) Applicant: Nederlandse Organisatie voor toegepast-natuurwetenschappelijk onderzoek TNO, 2628 VK Delft (NL)
(72) Inventor: van der Waaij, Bram Dirk, 2628 VK Delft (NL); Siljee, Johanneke, 2628 VK Delft (NL); Broekhuijsen, Bertram Jeroen, 2628 VK Delft (NL); Ponsioen, Celeste, 2628 VK Delft (NL); Maas, Aloys, 2628 VK Delft (NL); Aten, Robert, 2628 VK Delft (NL); Hoepman, Jaap-Henk, 2628 VK Delft (NL); van Loon, Joleen, 2628 VK Delft (NL); Smit Monica, 2628 VK Delft (NL)
(74) Representative: Hatzmann, Martin

(57) **Abstract**

A method of making a payment uses a first mobile communication device (1) and a second mobile communication device (2), each mobile communication device being provided with a respective near field communication unit (11, 21) and at least the first mobile communication device (1) being provided with an input unit (12) for inputting data. The method comprises the steps of:
• the first mobile communication device (1) receiving, through its near field communication unit (11), account data (ACD) from the second mobile communication device (2),
• the first mobile communication device (1) receiving, through its near field communication unit (11) or its input unit (12), amount data (AMD) indicative of an amount (X) to be paid,
• the first mobile communication device (1) transmitting, via a mobile communication link, a payment order (PAO) to a first financial institution (100), the payment order including the account data (ACD) and the amount data (AMD),
• the first financial institution (100), upon receipt of the payment order (PAO), transferring the amount (X) indicated by the amount data (AMD) to a second financial institution (200) identified by the account data (ACD),
• the first financial institution (100) transmitting a first confirmation (CN1) to the first mobile communication device (1), and
• the second financial institution (200), upon receipt of the amount (X), sending a second confirmation (CN2) to the second mobile communication device (2).

## Description

The present invention relates to electronic payments. More in particular, the present invention relates to a method of making payments using a mobile communication device, such as a mobile telephone, and to a system for making payments using mobile communication devices.

It is well known to use mobile communication devices, such as mobile telephones or PDAs (Personal Digital Assistants) provided with telecommunication facilities, to make payments. European Patent Application EP 0 785 534, for example, discloses a method of performing financial transactions by means of mobile telephone sets. This known method utilizes smart cards accommodated in the mobile telephones to provide end-to-end transactions between the smart cards and their counterparts (security units) at the service providers or financial institutions. However, this known method is not suitable for transactions between mobile telephones, as the smart cards used for authorising payments are different from the security units used for receiving payments.

It is further known to use near field communication (NFC) in financial transactions. International Patent Application WO 2006/087503, for example, discloses a mobile terminal which includes a near field or RFID tag. This near field tag can apparently be used to make a payment. However, it is not disclosed how the mobile terminal provided with a near field tag can make payments between mobile terminals.

It is an object of the present invention to overcome these and other problems of the Prior Art and to provide a method of making a payment using mobile communication devices, which method allows a payment to be made between the (users of the) mobile communication devices while reducing the amount of data to be entered by employing near field communication (NFC) or similar short-range communication techniques.

Accordingly, the present invention provides a method of making a payment using a first mobile communication device and a second mobile communication device, each mobile communication device being provided with a respective near field communication unit and at least the first mobile communication device being provided with an input unit for inputting data, the method comprising the steps of:
- the first mobile communication device receiving, through its near field communication unit, account data from the second mobile communication device,
- the first mobile communication device receiving, through its near field communication unit or its input unit, amount data indicative of an amount to be paid,
- the first mobile communication device transmitting, via a mobile communication link, a payment order to a first financial institution, the payment order including the account data and the amount data,
- the first financial institution, upon receipt of the payment order, transferring the amount indicated by the amount data to a second financial institution identified by the account data,
- the first financial institution transmitting a first confirmation to the first mobile communication device, and
- the second financial institution, upon receipt of the amount, sending a second confirmation to the second mobile communication device.

By using near field communication (NFC) to convey account data from the second mobile communication device to the first mobile communication device, the number of data items to be manually entered into the first mobile communication device is considerably reduced while the probability of introducing errors is also significantly reduced. Accordingly, the efficiency of the payment transaction is improved. By manually inputting amount data into the input unit the user has greater control over the amount of the payment, however, this may also introduce errors. Accordingly, the amount data may also be transferred using NFC.

The account data comprise data identifying an account, typically in the name of the user of the second mobile communication device, at the second financial institution (the receiving or second account). The payment order may additionally comprise data identifying an account, typically the name of the user of the first mobile communication device, at the first financial institution (the paying or first account). However, the first financial institution may derive the additional data identifying the first account from an identification of the first mobile communication device, for example its telephone number.

The amount data may be (manually or automatically) input into an input device of the second mobile communication device. Optionally, the user of the first mobile communication device input the same amount data into her (first) mobile communication device so as to state agreement over the amount of the transaction.

By providing confirmations to both the first mobile communication device and the second mobile communication device, the users of both devices are informed of the successful completion of the transaction by their own financial institution.

It is noted that the step of the first financial institution transmitting a first confirmation to the first mobile communication device may be carried out upon receipt of the payment order from the first mobile communication device, or upon receipt of an amount transfer acknowledgement from the second financial institution. In the former case, the first confirmation confirms the receipt of the payment order by the first financial institution. In the latter case, the second financial institution effectively sends a third confirmation to the first financial institution, confirming the receipt of the transferred amount. Alternatively, the step of the first financial institution transmitting a first confirmation to the first mobile communication device may be omitted, in which case the user of the first mobile communication device may receive an oral confirmation from the user of the second mobile communication device.

The security of the method is enhanced when the first mobile communication device requests, before transmitting the payment order, an access code. That is, a software application running on the first mobile communication device may only function, or may only transmit the payment order, if access has been gained using an access code, such as a PIN (Personal Identification Number) code or other identification (e.g. a finger print).

The input unit may be constituted by a keyboard, a touchpad unit or a similar unit suitable for entering numerical or alphanumerical data. Alternatively, or additionally, the input unit may comprise a bar code reader.

It is preferred that the first and second near field communication units are arranged for the NFC techniques standardised in the ECMA-340 and ISO/IEC-18092 standards. These techniques are based upon (electromagnetic) RF communication at a frequency of 13.56 MHz. However, other types of wireless short-range communication techniques may also be used, for example Infra-Red (IR) or Bluetooth® communication techniques. Accordingly, the present invention is not limited to electromagnetic (RF) techniques or the NFC protocols but also includes light (e.g. IR or laser) transmission techniques using the same or other protocols.

In some embodiments, the first financial institution and the second financial institution are the same. However, typically the first financial institution and the second financial institution will be different financial institutions.

The present invention also provides one or more computer program products for carrying out the method as defined above. A computer program product may comprise a set of computer executable instructions stored on a data carrier, such as a CD or a DVD. The set of computer executable instructions, which allow a programmable computing device to carry out the method as defined above, may also be available for downloading from a remote server, for example via the Internet. Such a computer program product may be used in one or both of the mobile communication devices.

The present invention additionally provides a system comprising a first mobile communication device and a second mobile communication device arranged to carry out the method defined above.

The present invention will further be explained below with reference to exemplary embodiments illustrated in the accompanying drawings, in which:
Fig. 1 schematically shows an embodiment of a payment system according to the present invention.
Fig. 2 schematically shows an embodiment of a method according to the present invention.

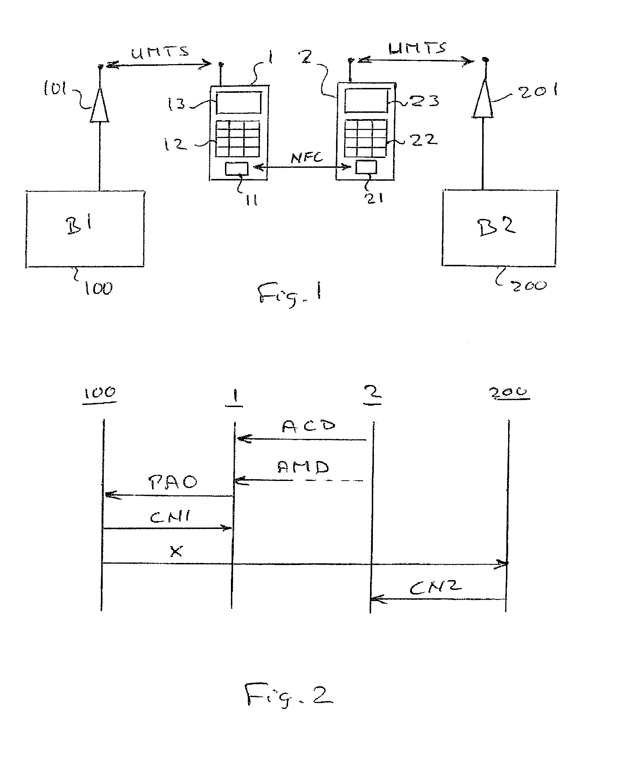

The system shown merely by way of non-limiting example in Fig. 1 comprises a first mobile communication device 1, a second mobile communication device 2, a first financial institution or bank (B1) 100 and a second financial institution or bank (B2) 200.

The first mobile communication device 1 and the second mobile communication device 2 are each provided with a respective short range wireless communication unit 11 and 21. In the preferred embodiment shown, the short range wireless communication units 11 and 21 are both NFC (near field communication) units designed for operating according to the ECMA-340, ISO/IEC-18092 and/or similar standards. The mobile communication devices are further provided with respective keypads 12 and 22, and with respective display screens 13 and 23.

The mobile communication devices 1 and 2 are, in the embodiment shown, mobile (cellular) telephone devices suitable for use with a GSM (Groupe Spéciale Mobile), UMTS (Universal Mobile Telecommunications System) or other type of mobile (cellular) telephone network. In Fig. 1, UMTS is mentioned by way of example, but the invention is of course not limited to the UMTS system.

The mobile telephone network includes antenna masts 101 and 102 which allow the mobile communication devices 1 and 2 to wirelessly communicate with the first financial institution 100 and the second financial institution 200 respectively. The NFC units 11 and 21 allow the mobile communication devices to exchange data at a small distance without involving the mobile (cellular) telephone network. In other embodiments, the devices 1 and 2 may be Personal Digital Assistants (PDAs), laptop computers or other devices having facilities for both mobile (cellular) and short-range wireless communication.

The exchange of data between the mobile communication devices and the financial institutions is schematically illustrated, by way of non-limiting example, in Fig. 2.

In the embodiment of Fig. 2 it is assumed that a payment function of the first mobile communication device 1 has been activated, for example by selecting a menu option and entering an access code, such as a PIN code. The payment function of the second mobile communication device 2 may have been activated too, or is always on.

When the NFC units of the mobile communication devices 1 and 2 are within each other's active range, the second NFC unit 21 transfers account data ACD to the first NFC unit 11. These account data ACD may comprise the bank account number (for example the IBAN) and personal data (for example the name and address) of the user of the second mobile communication device 2. The NFC units may initiate this data transfer, or may prompt their users for approval.

In the next step, amount data AMD indicative of the amount (X) to be transferred are received by the first mobile communication device 1. The amount data AMD may also be transferred by the NFC units, or may be entered in the keypad of the first mobile communication unit 1. The account data ACD and the amount data AMD together constitute a payment order PAO which is sent to the first financial institution via the mobile communication network. In GSM systems, a SMS message (text message) or GPRS data transfer may be used for this purpose.

Upon receipt of the payment order PAO, the first financial institution 100 send a (first) confirmation CN1 to the first mobile communication device 1 and transfer the amount X indicated by the amount data AMD to the second financial institution 200. The amount X may be transferred using a conventional data connection (not shown) between the financial institutions. It will be understood that the first and second financial institutions may be the same, in which this transfer is internal. In some embodiments, the first confirmation CN1 may be omitted or may be sent later.

Upon receipt of the amount X, the second financial institution 200 sends a (second) confirmation CN2 to the second mobile communication device 2 via the mobile communication network (antenna mast 201). Optionally, the second financial institution 200 also sends an acknowledgement (or third confirmation, not shown) to the first financial institution 100, confirming the receipt of the amount X. This acknowledgement may be sent via the mobile communication network or via another network. In some embodiments, the first confirmation CN1 will only be sent when the first financial institution has received this acknowledgement. It can also be envisaged that the second financial institution 200 sends the first confirmation CN1 to the first mobile communication device 1. This, of course, requires previously sending a suitable identifier of the first mobile communication device 1, such as a mobile telephone number, to the second financial institution 200.

By using a first and a second confirmation, the users of both mobile communication devices receive confirmation of the successful completion of the payment transaction.

The present invention is based upon the insight that near field techniques can advantageously be used to make payments between mobile communication devices. The present invention benefits from the further insight that using near field or similar techniques to transfer financial data between mobile communication devices reduces the probability of data entry errors and increases the speed at which such transactions can take place.

It is noted that any terms used in this document should not be construed so as to limit the scope of the present invention. In particular, the words "comprise(s)" and "comprising" are not meant to exclude any elements not specifically stated. Single elements may be substituted with multiple elements or with their equivalents.

It will be understood by those skilled in the art that the present invention is not limited to the embodiments illustrated above and that many modifications and additions may be made without departing from the scope of the invention as defined in the appending claims.

## Claims

1. A method of making a payment using a first mobile communication device (1) and a second mobile communication device (2), each mobile communication device being provided with a respective near field communication unit (11, 21) and at least the first mobile communication device (1) being provided with an input unit (12) for inputting data, the method comprising the steps of:
• the first mobile communication device (1) receiving, through its near field communication unit (11), account data (ACD) from the second mobile communication device (2),
• the first mobile communication device (1) receiving, through its near field communication unit (11) or its input unit (12), amount data (AMD) indicative of an amount (X) to be paid,
• the first mobile communication device (1) transmitting, via a mobile communication link, a payment order (PAO) to a first financial institution (100), the payment order including the account data (ACD) and the amount data (AMD),
• the first financial institution (100), upon receipt of the payment order (PAO), transferring the amount (X) indicated by the amount data (AMD) to a second financial institution (200) identified by the account data (ACD),
• the first financial institution (100) transmitting a first confirmation (CN1) to the first mobile communication device (1), and
• the second financial institution (200), upon receipt of the amount (X), sending a second confirmation (CN2) to the second mobile communication device (2).

2. The method according to claim 1, wherein the first mobile communication device (1) requests, before transmitting the payment order (PAO), an access code.

3. The method according to claim 1 or 2, wherein the input unit (12) is a keyboard or touchpad unit.

4. The method according to any of the preceding claims, wherein the second financial institution (200), upon receipt of the amount (X), sends a third confirmation to the first financial institution (100).

5. The method according to claim 4, wherein the first financial institution (100) only transmits the first confirmation (CN1) to the first mobile communication device (1) after receipt of the third confirmation.

6. The method according to any of the preceding claims, wherein the first financial institution (100) and the second financial institution (200) are the same.

7. A computer program product for carrying out the method according to any of claims 1-6.

8. A system for making payments, the system comprising a first mobile communication device (1) and a second mobile communication device (2) arranged to carry out the method of any of claims 1-6.
